# EUROPÄISCHE PATENTANMELDUNG

(11) **EP 0 737 500 A2**
(43) Veröffentlichungstag der Anmeldung: **16.10.1996**
(21) Anmeldenummer: 96810190.7
(22) Anmeldetag: 26.03.1996
(51) Int. Cl.: B01D 19/00, C02F 1/20

(54) **Apparat zur Aufwärmung und Entgasung von Wasser**

(30) Priorität: 11.04.1995 DE 19513204
(71) Anmelder: ABB Management AG, CH-5401 Baden (CH)
(72) Erfinder: Youssef, Mustafa, Dr., 8046 Zürich (CH)

(57) **Zusammenfassung**

Bei einem Apparat zur Aufwärmung und Entgasung von Wasser mittels Dampf, sind eine Wasserzufuhrleitung (1) für das aufzuheizende und zu entgasende Wasser (15), und eine Entgaserleitung (10) oberhalb einer Kolonnenanordnung (6) im Bereich eines Mischraums (3) eines Gehäuses (13) angeordnet. Unterhalb der im Gegenstromprinzip betriebenen Kolonnenanordnung (6) erfolgt die Dampfzufuhr aus einem Rohr (9). Der gegen die Fliessrichtung des Wassers (15) strömende Dampf (11, 12) teilt sich im Bereich der Kolonnenanordnung in zwei Strömungen, in einen Spüldampfstrom (11), der eine regulär Packung (5) in der Kolonnenanordnung (6) durchströmt, und einen Heizdampfstrom (12), der durch einen Bypasskanal (8) an der Packung (5) vorbeiströmt in den Mischraum (3). Im Mischraum (3) erfolgt mittels Heizdampf die Erwärmung und Entgasung des Wassers. Abgeschlossen wird die Entgasung in der Packung (5). Die freigesetzten Gase werden mittels Spüldampf (11) in den Mischraum (3) geleitet, und von dort über die Entgaserleitung (10) abgesaugt. Die Bypasskanalanordnung (8) erlaubt eine erhebliche Reduktion des Querschnitts des Entgasergehäuses (13) und der Kolonnenanordnung (6).

## Beschreibung

### TECHNISCHES GEBIET

Die Erfindung betrifft einen Apparat zur Aufwärmung und Entgasung von Wasser mittels Dampf, wie er im Oberbegriff des ersten Anspruchs beschrieben ist.

Ein derartiger Apparat ist beispielsweise bekannt aus der EP 0 461 515 A1.

### STAND DER TECHNIK

Das Kondensat in einem Wasser-Dampf-Kreislauf muss wirksam entgast werden, um Schäden in Rohrleitungen, Kessel und Komponenten durch einen zu hohen Gehalt unkondensierbarer Gase zu verhindern. Insbesondere wenn ein grosser Zusatzwasserbedarf besteht, wie beispielsweise in Anlagen mit Wasser- oder Dampfeinspritzung in die Brennkammer einer Gasturbine oder Anlagen mit Prozessdampfentnahme, ist es nicht möglich, die gesamte Zusatzwassermenge in einen Kondesator einzuführen und zu entgasen. Die zusätzlich eingeführte Wassermenge wird vor Eintritt in einen Speisewasserbehälter mit Dampf vorgewärmt und entgast.

Bekannt im Zusammenhang mit der Entgasung von Flüssigkeiten sind Austauschsäulen bzw. Kolonnen, in denen der Dampf und die Flüssigkeit zueinander geführt werden (LUEGER, Band 16, Lexikon der Verfahrenstechnik, Vierte Auflage, Deutsche Verlagsanstalt Stuttgart, Seite 51). Darin werden die Flüssigkeit und der Dampf eines zu trennenden Gemisches so im Gegen-, Gleich/Gegen- oder im Gleichstrom zueinander geführt, dass sich beide Phasen zum Stoff- und zum Wärmeaustausch möglichst innig berühren. Die Verwendung einer Entgaserkolonne in Gegenstromschaltung ist zum Erzielen einer maximalen Trennarbeit bei einer bestimmten Säulenhöhe von Bedeutung. Grössere Wasserströme mit grösserer Unterkühlung bringen jedoch bei einer Gegenstromschaltung das Problem mit sich, dass ein grosser Dampfstrom die Kolonne gegen das Wasser überwinden muss (Überflutungsgefahr einer Füllkörperkolonne wegen grosser Dampfbelastung), ohne signifikante Wirkung für die stoffkinetische Trennarbeit in der Säule zu erreichen, da die Aufwärmung bis zur Sättigungstemperatur des Wassers im oberen Teil stattfindet. Die Folge einer solchen konstruktiven Lösung ist jedoch, dass der Durchmesser der Säule stark erhöht werden muss, um die Überflutung der Packung zu verhindern, mit beträchtlichen Mehrkosten für den Apparat.

Die EP 0 461 515 A1 beschreibt nun einen Apparat, der in zwei hintereinandergeschalteten Kolonnen die Aufwärmung und Entgasung von Kondensat und Zusatzwasser vornimmt. Das grössere Dampfvolumen für die Aufwärmung in der Gleichstromkolonne wird oberhalb dieser Kolonne seitlich an eine Mischkammer durch eine Rohrleitung zugeführt. Diese Anordnung kann wegen einer Drehmomenteneinwirkung auf die geschweisste Verbindung des Apparats, beispielsweise an einen Speisewasserbehälter, eine starke mechanische Beanspruchung darstellen. Desweiteren bedingt eine doppelstufige Kolonnenanordnung eine grosse und damit kostenintensive Bauhöhe des Apparats.

### DARSTELLUNG DER ERFINDUNG

Der Erfindung liegt die Aufgabe zugrunde, einen Apparat zur Aufwärmung und Entgasung von Wasser der eingangs genannten Art dahingehend weiterzuentwickeln, dass bei sowohl grosser Aufwärmungsleistung als auch grosser Entgasungsleistung eine kleinere geometrische, also kompaktere Form des Apparates erreicht wird.

Erfindungsgemäss wird diese Aufgabe durch die Merkmale des ersten Anspruchs gelöst.

Der neue Entgaser weist die folgenden Vorteile auf:
- Mit dem Einsatz eines Bypasskanals, der an der Füllkörperkolonne vorbeiführt, kann bei einer Dampfeinführung unterhalb der Kolonne der Entgaserdurchmesser erheblich reduziert werden, wobei einerseits die gute Aufwärmung des Wassers oberhalb der Kolonne durch die direkte Heizdampfbeaufschlagung mit vollständiger Kondensierung des Heizdampfs erzielt wird, und andererseits die gute Entgasungsleistung mittels Spüldampf im Gegenstromprinzip ausgenutzt wird.
- Durch die Anwendung von nur noch einer Kolonnenstufe weist der Apparat eine geringere Bauhöhe auf.
- Die Dampfeinführung von Spüldampf und Heizdampf erfolgt in einer Zuleitung unterhalb der Kolonne, wodurch die Drehmomentenbelastung für die geschweisste Verbindung des Apparats an einem Speisewasserbehälter reduziert wird.
- Die niedrige Dampfstrombelastung der Gegenstromkolonne erlaubt einen kleineren Durchmesser des in der Kolonne angeordneten Füllkörpers bei dennoch stabilem hydraulischem Verhalten ohne die Gefahr der Flutgrenze. Die Durchmesserreduktion ist mit erheblichen Einsparungen von Material verbunden ist.

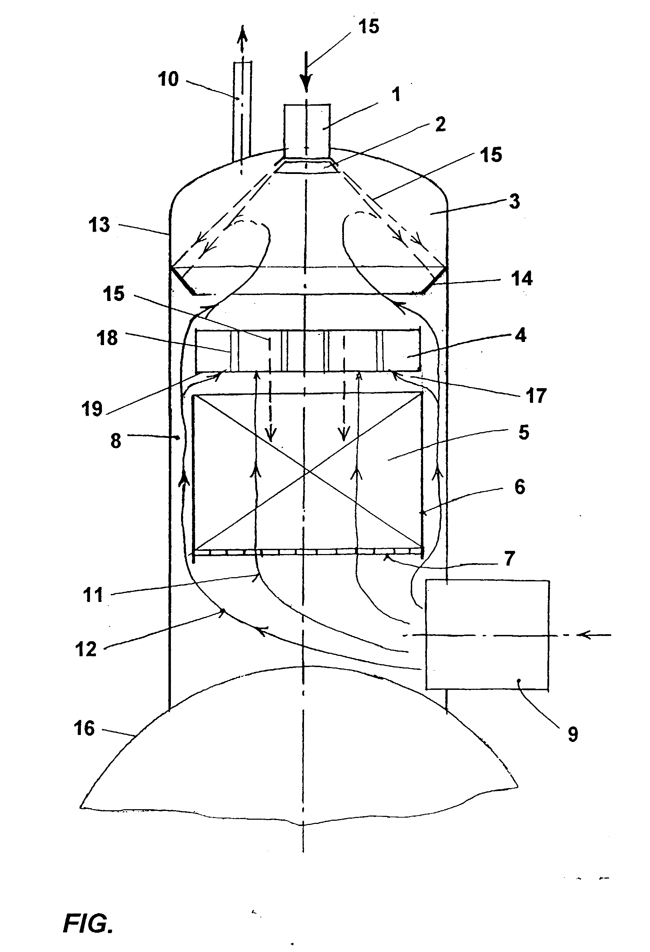

### KURZE BESCHREIBUNG DER ZEICHNUNG

In der Zeichnung ist anhand eines Entgasers mit Vorwärmung ein Ausführungsbeispiel der Erfindung für eine Kraftwerksanwendung schematisch dargestellt.

Die einzige Fig. zeigt:
einen Längsschnitt durch einen vertikal angeordneten Entgaser.

Es sind nur die für das Verständnis der Erfindung wesentlichen Elemente gezeigt. Die Strömungsrichtungen der beteiligten Medien sind mit Pfeilen bezeichnet.

### WEG ZUR AUSFÜHRUNG DER ERFINDUNG

Eine zylindrische Kolonnenanordnung 6 enthält Füllkörper 5, die im folgenden Packung genannt werden, wobei es sich dabei um eine Schüttung, also um eine sogenannte ungeordnete Füllung handeln kann, oder um eine reguläre Packung, welche die Vorzüge einer höheren Trennleistung bei geringerem Druckabfall durch eine homogene Verteilung bietet. Als Material für solche Packungen können Edelstahl, Keramik oder Kunstoffgewebe verwendet werden, die sich alle durch eine gute Benetzbarkeit bei wässrigen Lösungen auszeichnen. Gehalten ist die Packung durch einen Tragrost 7.

Die Kolonnenanordnung 6 ist von einem ebenfalls zylindrischen Gehäuse 13 umgeben, dessen Querschnitt grösser ist als der Kolonnenquerschnitt. Dadurch wird zwischen der Kolonnenanordnung 6 und dem Gehäuse 13 ein Ringkanal 8 als Bypasskanal für einen Heizdampfstrom 12 ausgebildet, der diesen durchströmt. Dieser Heizdampfstrom 12 ist ein Teilstrom einer Dampfströmung 11, 12, die durch eine Dampf zufuhrleitung 9 unterhalb der Kolonnenanordnung 6 einströmt. Der andere Dampfteilstrom 11 dient als Spüldampf und durchströmt die Packung 5.

Das Gehäuse 13 schliesst oben mit einem Dom ab. Im Bereich des Domes ist ein Mischraum 3 ausgebildet, in den von oben durch ein Sprühventil 2 unterkühltes Wasser aus einer Wasserzufuhrleitung 1 eingesprüht wird. Heizdampf 12, der an der Kolonnenanordnung 6 vorbeigeströmt ist, vermischt sich im Mischraum 3 mit dem eingesprühten Kondensat derart, dass die Austragung unkondensierbarer, im Kondensat gelöster Gase auf rein thermodynamischer Basis erfolgt. Dabei wird der Heizdampf 12 vollständig durch Wärmeabgabe an das unterkühlte Wasser 15 kondensiert, und gleichzeitig der Sättigungswert der gelösten Gase vermindert (Sprudeleffekt). Der Partialdruck der gelösten Gase übersteigt hier den herrschenden Gesamtdruck.

Das bis zur Sättigungstemperatur aufgewärmte Wasser befindet sich nun im thermischen Gleichgewichtszustand und wird in Fliessrichtung durch einen Kragen 14 zu einem Verteiler 4 hin umgelenkt. Der Verteiler 4 weist eine siebartige Bodenplatte 19 mit angeschweissten, vertikal verlaufende Dampfkanälen 18 auf, und hat einen ebenfalls kleineren Querschnitt als das ihn umgebende Gehäuse 13.

Ein Anteil des Heizdampfes 12 umströmt den Verteiler 4, ein weiterer Heizdampfanteil und Spühldampf 11 aus der Packung 5 strömen in einen Zwischenraum 17 zwischen Verteiler 4 und Packung 5, und anschliessend durch die Dampfkanäle 18 des Verteilers 4 zur weiteren Austragung der Gase aus dem Wasser 15.

Der Verteiler 4 führt der Packung 5 das gleichmässig über den Querschnitt verteilte Kondensat zu. Der massgebende Anteil der Entgasung geschieht dann auf rein stoffkinetischer Basis durch diffusen Transport der gelösten Gase über die Gas/Flüssigkeitsgrenzschicht in der im Gegenstromprinzip betriebenen Kolonnenanordnung 6. Der Spüldampfstrom 11 strömt mit den ausgetragenen, unkondensierbaren Gases nach oben, durch den Verteiler 4 in den oberen Teil des Mischraums 3. Von hier aus wird ein Anteil des Dampfes durch eine Entlüftungsleitung 10 mit den ausgetragenen Gasen abgesaugt. Da in der im Gegenstrom betriebenen Kolonnenanordnung 6 nur ein kleiner Spüldampfstrom nach oben gegen das Wasser strömt, ist keine Gefahr der Überflutung vorhanden.
Der grösste Anteil des unter der Packung 5 zugeführten Dampfstromes 11, 12 wird als Heizdampfstrom 12 an der Kolonnenanordnung in einem Kanal ohne Wasserbelastung vorbeigeführt. Diese Anordnung ermöglicht eine erhebliche Reduktion des Packungsquerschnitts und somit auch des Gehäusequerschnitts.
Da nur noch eine Kolonnnenanordnung 6 benötigt wird, ist auch die Bauhöhe des Gehäuses 13 kleiner, als bei Entgasern mit Vorwärmung im Gleich/Gegenstromprinzip.

Entgastes Wasser aus der Packung 5 fliesst durch das Tragrost 7 in einen am unteren Ende des Entgasergehäuses 13 angeschweissten Speisewasserbehälter 16. Unmittelbar oberhalb der Verbindung zwischen Entgasergehäuse 13 und Speisewasserbehälter 16 mündet die Dampfzufuhrleitung 9 in den Entgaser. Diese Anordnung stellt für die geschweisste Verbindung eine geringere mechanische Drehmomentenbelastung dar, als bei einer Rohranordnung im oberen Bereich des Entgasers.

Mit der beschriebenen Reduktion der geometrischen Dimensionen beteiligter Entgaserkomponenten werden bemerkenswerte Einsparungen erzielt bei der Produktion des Apparates.

Selbstverständlich ist die Erfindung nicht auf das gezeigte und beschriebene Ausführungsbeispiel beschränkt. So ist beispielsweise der hier als Ringkanal 8 ausgeführte Heizdampf-kanal 8 auch als Zentralkanal in der Mitte der Kolonnenanordnung 6 denkbar im Sinn der Erfindung. Auch Rohre, die aussen am Gehäuse 13 den Heizdampfstrom 12 an der Kolonnenanordnung 6 vorbeiführen, sind erfindungsgemäss denkbar.

### BEZUGSZEICHENLISTE

- 1: Wasserzufuhrleitung
- 2: Sprühventil
- 3: Mischraum
- 4: Verteiler
- 5: Füllkörper
- 6: Gegenstromkolonne
- 7: Tragrost
- 8: Ringkanal
- 9: Dampf zufuhrleitung
- 10: Entlüftungsleitung
- 11: Spüldampfstrom
- 12: Heizdampfstrom
- 13: Gehäuse
- 14: Kragen
- 15: Wasser
- 16: Speisewasserbehälter
- 17: Zwischenraum
- 18: Dampfkanäle
- 19: Bodenplatte

## Patentansprüche

1. Apparat zur Aufwärmung und Entgasung von Wasser mittels Dampf, im wesentlichen bestehend aus einer in einem Gehäuse (13) untergebrachten Kolonnenanordnung (6), mit einer oberhalb der Kolonnenanordnung (6) in einen Mischraum (3) mündenden Wasserzufuhrleitung (1) für das aufzuheizende und zu entgasende Wasser (15), wobei in dem Mischraum (3) Sprühmittel (2) für das Wasser angeordnet sind, sowie je einer ins Gehäuse mündenden Dampfzufuhrleitung (9) und Entlüftungsleitung (10) für das abzusaugende Gas/Dampfgemisch,
dadurch gekennzeichnet,
- dass die Entlüftungsleitung (10) oberhalb der Kolonnenanordnung (6) im Gehäuse (13) angeordnet ist und in den Mischraum (3) abzweigt,
- dass die Dampf zufuhrleitung (9) unterhalb der Kolonnenanordnung (6) in das Gehäuse mündet, derart, dass die Kolonnenanordnung im Gegenstromprinzip gegen die Wasserfliessrichtung mit Dampf (11, 12) beaufschlagt ist,
- und, dass in der Ebene der Kolonnenanordnung (6) der vom Dampf durchströmte Querschnitt grösser ist als der eigentliche Kolonnenquerschnitt.

2. Apparat nach Anspruch 1,
dadurch gekennzeichnet,
dass das Gehäuse (13) und die Kolonnenanordnung (6) zylindrisch ausgebildet sind.

3. Apparat nach Anspruch 1,
dadurch gekennzeichnet,
dass oberhalb der Kolonnenanordnung (6) ein Wasserverteiler (4) angeordnet ist.

4. Apparat nach Anspruch 1,
dadurch gekennzeichnet,
dass der Mischraum (3) in Wasserfliessrichtung von einem Kragen (14) begrenzt wird.
